# EUROPEAN PATENT SPECIFICATION

(11) **EP 3 156 840 B1**
(45) Date of publication and mention of the grant of the patent: **11.04.2018**
(21) Application number: 16180514.8
(22) Date of filing: 21.07.2016
(51) Int. Cl.: G02F 1/1333, G02F 1/1339

(54) **LIQUID CRYSTAL DISPLAY DEVICE OF THE MICROCAVITY-TYPE HAVING PLANARIZED SURFACE**
FLÜSSIGKRISTALLANZEIGEVORRICHTUNG DES MIKROHOHLRAUM-TYPS MIT EBENER OBERFLÄCHE
DISPOSITIF D'AFFICHAGE A CRISTAUX LIQUIDES DE TYPE MICROCAVITÉ AYANT UNE SURFACE PLANARISÉE

(30) Priority: 15.10.2015 KR 20150143871
(43) Date of publication of application: 19.04.2017
(73) Proprietor: Samsung Display Co., Ltd., Gyeonggi-do 17113 (KR)
(72) Inventor: Jin, You Young, Suwon-si, Gyeonggi-do (KR); Kwon, Seong Gyu, Suwon-si, Gyeonggi-do (KR); Kim, Sang Il, Yongin-si, Gyeonggi-do (KR); Lee, Dae Ho, Seoul (KR)
(74) Representative: Gulde & Partner

(56) References cited:
- US-A1- 2015 212 351

## Description

### Related Applications

This application claims priority of the Korean Patent Application No. 10-2015-0143871, filed in the Korean Intellectual Property Office on October 15, 2015.

### BACKGROUND

### 1. Field

The described technology relates generally to display devices. More particularly, the described technology relates generally to display devices having planarized surfaces.

### 2. Description of the Related Art

Liquid crystal displays, which are one of the most common types of flat panel displays currently in use, include two sheets of display panels with field generating electrodes, such as a pixel electrode, a common electrode, and the like, with a liquid crystal layer interposed therebetween. A liquid crystal display generates an electric field in the liquid crystal layer by applying a voltage to the field generating electrodes. This voltage generates an electric field that acts to align liquid crystal molecules of the liquid crystal layer and to thereby control polarization of incident light, thus displaying images.

The two display panels configuring the liquid crystal display may include a thin film transistor array panel and an opposing display panel. In the thin film transistor array panel, a gate line transferring a gate signal and a data line transferring a data signal are formed to cross each other, and a thin film transistor connected with the gate line and the data line, a pixel electrode connected with the thin film transistor, and the like may be formed. In the opposing display panel, a light blocking member, a color filter, a common electrode, and the like may be formed. In some cases, the light blocking member, the color filter, and the common electrode may be formed on the thin film transistor array panel.

However, in conventional liquid crystal displays, two substrates are necessarily used, and respective constituent elements are formed on the two substrates. As a result, there are problems in that the display device is heavy and thick, has a high cost, and has a long processing time.

The above information disclosed in this Background section is only to enhance the understanding of the background of the invention, and therefore it may contain information that does not form the prior art that is already known in this country to a person of ordinary skill in the art. US 2015/0212351 A1 discloses a liquid crystal display device of the micro-cup type with only one substrate and a roof layer, wherein micro-cavities are formed between the roof layer and the substrate that are filled with a liquid crystal material. The roof layer is provided in the shape of a plurality of strips exposing liquid crystal injection holes in gaps between the roof layer strips, and an encapsulation layer seals the injection holes.

### SUMMARY

The described technology provides a display device capable of reducing the weight, thickness, manufacturing cost, and processing time of a display device.

The described technology provides a display device, the upper surface of which is flat.

A display device according to an exemplary embodiment includes the features of appended independent claim 1. The injection hole may contact the trench. The thickness of the first portion of the roof layer may be less than that of the second portion of the roof layer.

The microcavity may have a substantially uniform height.

The height of a portion of the microcavity overlapping the first portion of the roof layer may be lower than the height of a portion of the microcavity overlapping the second portion of the roof layer.

The roof layer may have a substantially uniform thickness.

The display device according to the exemplary embodiment may further include an insulation layer disposed above the thin film transistor.

A portion of the insulation layer overlapping the first portion of the roof layer may be thinner than a portion of the insulation layer overlapping the second portion of the roof layer.

The roof layer may have a substantially uniform thickness.

The microcavity may have a substantially uniform height.

According to the present invention, the following effects can be provided.

The display device according to the exemplary embodiment can be manufactured using a single substrate, thereby reducing height and weight, and saving manufacturing cost and time.

Further, a step is formed at an edge of the roof layer, adjacent to the injection hole, and the injection hole is covered by the encapsulation layer such that the upper surface of the encapsulation layer and the upper surface of the roof layer can be planarized. Accordingly, a polarizing plate disposed above the encapsulation layer and the roof layer can be prevented from being lifted.

### BRIEF DESCRIPTION OF THE DRAWINGS

FIG. 1 is a top plan view of a display device according to an exemplary embodiment.
FIG. 2 is an equivalent circuit diagram of a pixel of a display device according to the exemplary embodiment.
FIG. 3 is a top plan view that partially illustrates a display device according to the exemplary embodiment.
FIG. 4 is a cross-sectional view taken along line IV-IV of FIG. 3.
FIG. 5 is a cross-sectional view taken along line V-V of FIG. 3.
FIG. 6 is a cross-sectional view of a display device according to the exemplary embodiment.
FIG. 7 is a cross-sectional view of a display device according to a reference example.
FIG. 8 is a simplified cross-sectional view of FIG. 7.
FIG. 9 is a cross-sectional view of a display device according to an exemplary embodiment.
FIG. 10 is a simplified cross-sectional view of FIG. 9.
FIG. 11 is a cross-sectional view of a display device according to an exemplary embodiment.
FIG. 12 is a simplified cross-sectional view of FIG. 11.

### DETAILED DESCRIPTION

The present invention will be described more fully hereinafter with reference to the accompanying drawings, in which exemplary embodiments of the invention are shown. As those skilled in the art would realize, the described embodiments may be modified in various different ways, all without departing from the scope of the present invention.

In the drawings, the thickness of layers, films, panels, regions, etc., are exaggerated for clarity. The various Figures are thus not to scale. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

All numerical values are approximate, and may vary. All examples of specific materials and compositions are to be taken as nonlimiting and exemplary only. Other suitable materials and compositions may be used instead.

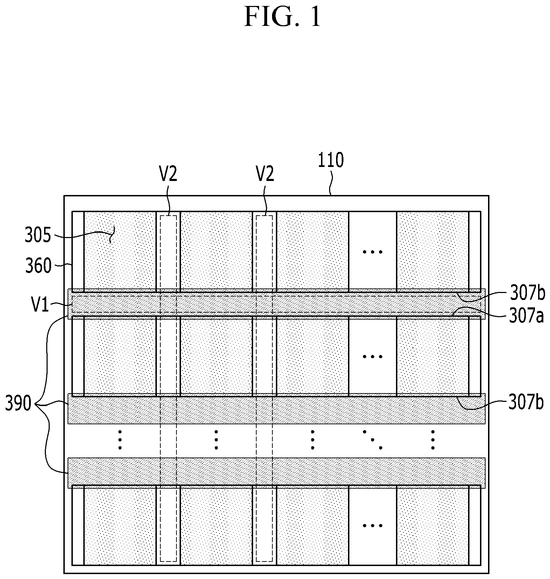

First, referring to FIG. 1, a display device according to an exemplary embodiment will be schematically described.

FIG. 1 is a top plan view of a display device according to an exemplary embodiment.

The display device according to the present exemplary embodiment includes a substrate 110 made of a material such as glass or plastic.

Microcavities 305 covered by a roof layer 360 are provided on the substrate 110. The roof layer 360 extends in a row direction, and a plurality of microcavities 305 are formed below a single roof layer 360.

The microcavities 305 may be arranged in a matrix format, in regular rows and columns. Here, a first area V1 is disposed between each of the microcavities 305 that neighbor in a column direction and a second area V2 is disposed between each of the microcavities 305 that neighbor in a row direction.

A plurality of roof layers 360 is provided on the substrate 110, and the first area V1 is provided between adjacent roof layers 360. The microcavities 305 that contact the first area V1 may be exposed rather than being covered by the roof layer 360. The exposed portions of the microcavities 305 will be referred to as injection holes 307a and 307b.

The injection holes 307a and 307b are provided at lateral or side edges of each microcavity 305. The injection holes 307a and 307b include a first injection hole 307a and a second injection hole 307b. The first injection hole 307a exposes a side surface of a first edge of a microcavity 305, and the second injection hole 307b exposes a side surface of a second edge of an adjacent microcavity 305. The side surface of the first edge and the side surface of the second edge of the microcavities 305 face each other.

Each roof layer 360 is distanced from the substrate 110 between neighboring second areas V2 such that the microcavities 305 are formed. That is, the roof layers form gaps between themselves and the substrate 110, where these gaps are exposed by injection holes 307a and 307b.

The above-described structure of the display device is but one example, and the structure of the display device can be variously modified. For example, alignment of the microcavities 305, the first areas V1, and the second areas V2 can be modified, the roof layers 360 may be connected with each other in the first areas V1, and a part of each roof layer 360 may be distanced from the substrate 110 in the second area V2 such that neighboring microcavities 305 may be connected with each other.

An encapsulation layer 390 is provided in each first area V1. The encapsulation layer 390 seals the microcavity 305 by covering the injection holes 307a and 307b. The encapsulation layer 390 may overlap an edge of the roof layer 360 that is adjacent to the injection holes 307a and 307b. The encapsulation layer 390 does not wholly cover the upper surface of the roof layer 360, but instead only partially covers the edge of the roof layer 360.

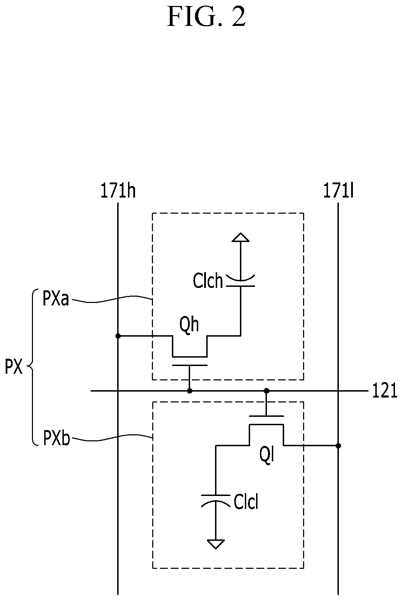

Hereinafter, a pixel of a display device according to the exemplary embodiment will be described with reference to FIG. 2.

FIG. 2 is an equivalent circuit diagram of a pixel of a display device according to the exemplary embodiment.

A display device according to the present exemplary embodiment includes a plurality of signal lines 121, 171h, and 171l, and a plurality of pixels, each of which is connected with the plurality of signal lines 121, 171h, 171l. Although not illustrated, the plurality of pixels PX may be arranged in a matrix format including a plurality of rows and a plurality of columns.

Each pixel PX may include a first subpixel PXa and a second subpixel PXb. The first subpixel PXa and the second subpixel PXb may be vertically disposed. In this case, the first area V1 may be disposed between the first subpixel PXa and the second subpixel PXb to extend along the pixel row direction, and the second area V2 may be disposed between adjacent pixel columns.

The signal lines 121, 171h, and 171l include a gate line 121 transmitting a gate signal, and first and second data lines 171h and 171l respectively transmitting data voltages that are different from each other.

A first thin film transistor Qh connected with the gate line 121 and the first data line 171h is provided in the first subpixel PXa, and a second thin film transistor Ql connected with the gate line 121 and the second data line 171l is provided in the second subpixel PXb.

A first liquid crystal capacitor Clch connected with the first thin film transistor Qh is provided in the first subpixel PXa, and a second liquid crystal capacitor Clcl connected with the second thin film transistor Ql is provided in the second subpixel PXb.

A first terminal of the first thin film transistor Qh is connected with the gate line 121, a second terminal thereof is connected with the first data line 171h, and a third terminal thereof is connected with the first liquid crystal capacitor Clch.

A first terminal of the second thin film transistor Ql is connected with the gate line 121, a second terminal thereof is connected with the second data line 171l, and a third terminal thereof is connected with the second liquid crystal capacitor Clcl.

When a gate-on voltage is applied to the gate line 121, the first thin film transistor Qh and the second thin film transistor Ql connected with the gate line 121 are turned on, and the first and second liquid crystal capacitors Clch and Clcl are charged by data voltages respectively transmitted through the first and second data lines 171h and 171l, such that the pixel PX generates an image. The data voltage transmitted by the second data line 171l is lower than the data voltage transmitted by the first data line 171h. Thus, the second liquid crystal capacitor Clc is charged with a voltage lower than that of the first liquid crystal capacitor Clch, thereby enhancing side visibility.

It is noted that the present invention is not limited to the above configuration. For example, alignment of the thin film transistors that apply respectively different voltages to two subpixels PXa and PXb can be variously modified. Further, each pixel PX may include two or more subpixels, or may be provided as a single pixel.

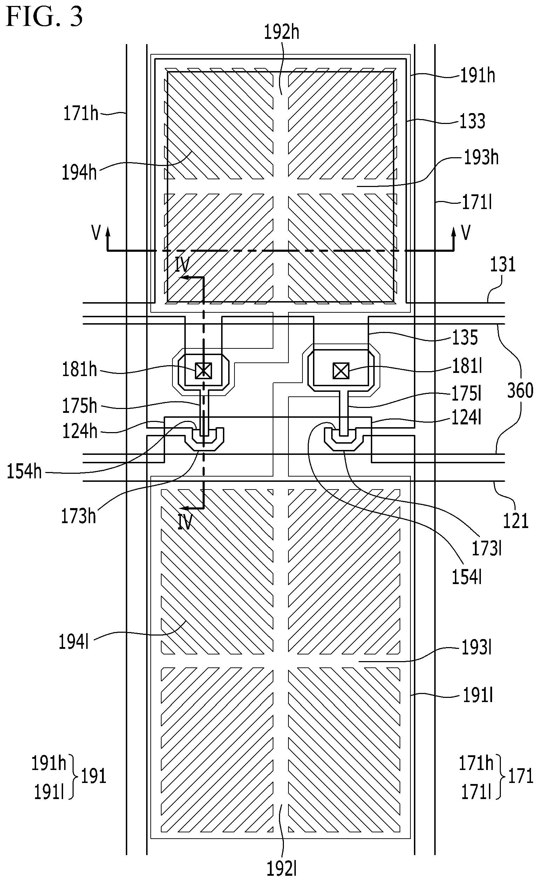

Hereinafter, a structure of a pixel of a display device according to the exemplary embodiment will be described in further detail with reference to FIG. 3 to FIG. 5.

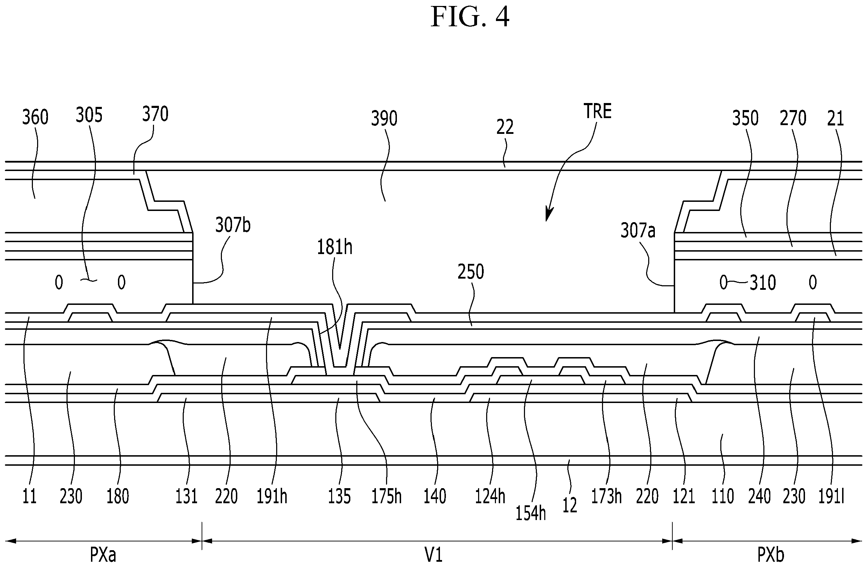

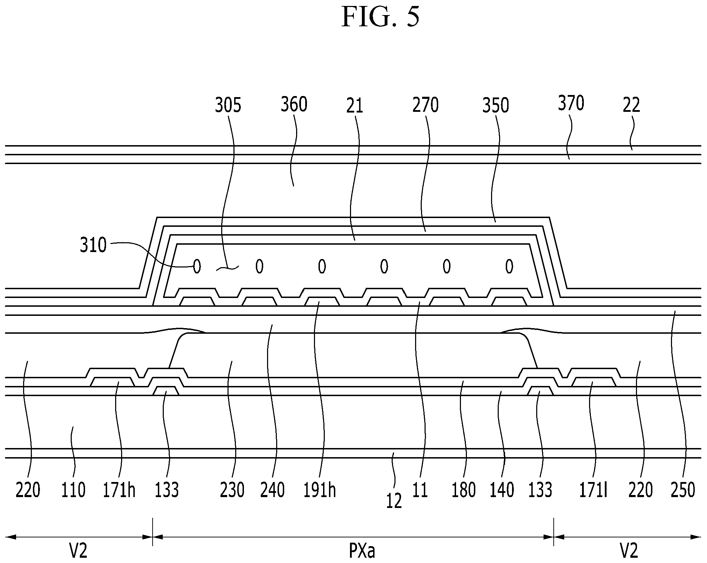

FIG. 3 is a plan view that partially illustrates a display device according to the exemplary embodiment, FIG. 4 is a cross-sectional view taken along line IV-IV of FIG. 3, and FIG. 5 is a cross-sectional view taken along line V-V of FIG. 3.

Referring to FIG. 3 to FIG. 5, the gate line 121 and first and second gate electrodes 124h and 124l that protrude from the gate line 121 are provided on the substrate 110.

The gate line 121 extends mainly in a first direction, and transmits a gate signal. The gate line 121 is disposed between two microcavities 305 that neighbor each other along a column direction. That is, the gate line 121 is disposed in the first area V1. The first gate electrode 124h and the second gate electrode 124l protrude upward from the gate line 121 in plan view. In this embodiment, the first gate electrode 124h and the second gate electrode 124l are connected with each other such that a single protrusion is formed. However, the present invention is not limited thereto, and the shape of the first and second gate electrodes 124h and 124l can be variously modified.

A reference voltage line 131, and storage electrodes 133 and 135 that protrude from the reference voltage line 131, may be further provided on the substrate 110.

The reference voltage line 131 extends generally in a direction that is parallel with the gate line 121, and is distanced or spaced apart from the gate line 121. The reference voltage line 131 may receive a constant voltage. The storage electrode 133 protrudes above the reference voltage line 131 and surrounds the edge of the first subpixel PXa. The storage electrode 135 that protrudes below the reference voltage line 131 is adjacent to the first gate electrode 124h and the second gate electrode 124l. The storage electrode 135 that protrudes below the reference voltage line 131 overlaps a first drain electrode 175h and a second drain electrode 175l.

A gate insulating layer 140 is provided above the gate line 121, the first gate electrode 124h, the second gate electrode 124l, the reference voltage line 131, and the storage electrodes 133 and 135. The gate insulating layer 140 may be made of an inorganic insulation material such as silicon nitride (SiNx), silicon oxide (SiOx), and the like. Further, the gate insulating layer 140 may be formed as a single layer or multiple layers.

A first semiconductor 154h and a second semiconductor 154l are provided on the gate insulating layer 140. The first semiconductor 154h may be disposed on the first gate electrode 124h, and the second semiconductor 154l may be disposed on the second gate electrode 124l. In this embodiment, the first semiconductor 154h may not be disposed below the first data line 171h and the second semiconductor 154l may not be disposed below the second data line 171l. In other embodiment, the first semiconductor 154h may be disposed below the first data line 171h and the second semiconductor 154l may be disposed below the second data line 171l. The first semiconductor 154h and the second semiconductor 154l may be made of amorphous silicon, polycrystalline silicon, metal oxide, and the like.

An ohmic contact member (not shown) may be further provided above the first semiconductor 154h and the second semiconductor 154l. The ohmic contact member may be made of a silicide or a material such as n+ hydrogenated amorphous silicon in which an n-type impurity is doped at a high concentration.

The first data line 171h, the second data line 171l, a first source electrode 173h, a first drain electrode 175h, a second source electrode 173l, and a second drain electrode 175l are provided on the first semiconductor 154h, the second semiconductor 154l, and the gate insulating layer 140.

The first data line 171h and the second data line 171l transmit data signals, and extend in a second direction to cross the gate line 121 and the reference voltage line 131. The data lines 171 are each provided between two microcavities 350 that neighbor each other in a row direction. That is, each data line 171 is disposed in a second area V2.

The first data line 171h and the second data line 171l respectively transmit data voltages that are different from each other. For example, a data voltage transmitted by the second data line 171l may be lower than a data voltage transmitted by the first data line 171h.

The first source electrode 173h protrudes from the first data line 171h to extend over the first gate electrode 124h, and the second source electrode 173l protrudes from the second data line 171l to extend over the second gate electrode 124l. The first drain electrode 175h and the second drain electrode 175l respectively include one wide end portion and an opposing bar-shaped end portion. The wide end portions of first and second drain electrodes 175h and 175l overlap the storage electrode 135. The bar-shaped end portions of the first and second drain electrodes 175h and 175l are partially surrounded by the first source electrode 173h and the second source electrode 173l, respectively.

The first and second gate electrodes 124h and 124l, the first and second source electrodes 173h and 173l, and the first and second drain electrodes 175h and 175l form the first and second thin film transistors (TFTs) Qh and Ql together with the first and second semiconductors 154h and 154l. In this case, a channel of each thin film transistor is provided in each of the semiconductors 154h and 154l between the respective source electrodes 173h and 173l and the respective drain electrodes 175h and 175l.

A passivation layer 180 is provided above the first semiconductor 154h. The passivation layer may be made of an organic or inorganic insulation material, and may be formed as a single layer or multiple layers.

A color filter 230 is provided above the passivation layer 180 in each pixel PX.

Each color filter 230 may display one primary color, such as the three primary colors of red, green, and blue. The filter 230 may alternatively display any other color, such as cyan, magenta, yellow, or a white-based color. The color filter 230 may be removed from the first area V1 and/or the second area V2.

A light blocking member 220 is provided between adjacent color filters 230. The light blocking member 220 is provided above a boundary of each pixel PX and its thin film transistors Qh and Ql, to prevent light leakage. That is, the light blocking member 220 may be provided in the first area V1 and the second area V2. However, the present invention is not limited thereto, and the light blocking member may be provided in the first area V1 and may be absent from the second area V2. In this case, neighboring color filters 230 may overlap in the second area V2 to prevent light leakage. The color filter 230 and the light blocking member 220 may overlap each other if desired.

A first insulation layer 240 may further be provided on the color filter 230 and the light blocking member 220. The first insulation layer 240 may be made of an organic insulation material, and may act to flatten the upper surface of the color filter 230 and the light blocking member 220.

A second insulation layer 250 may be further provided on the first insulation layer 240. The second insulation layer 250 may be made of an inorganic insulation material.

A first contact hole 181h that exposes the wide end portion of the first drain electrode 175h, and a second contact hole 1811 that exposes the wide end portion of the second drain electrode 1751, are provided through the passivation layer 180, the first insulation layer 240, and the second insulation layer 250.

A pixel electrode 191 is provided on the second insulation layer 250. The pixel electrode 191 may be made of a transparent metal oxide such as indium-tin oxide (ITO), indium-zinc oxide (IZO), and the like.

The pixel electrode 191 may include a first subpixel electrode 191h and a second subpixel electrode 191l that are separated from each other, interposing the gate line 121 and the reference voltage line 131 therebetween. The first subpixel electrode 191h and the second subpixel electrode 1911 are vertically disposed with respect to the gate line 121 and the reference voltage line 131 in plan view. That is, the first subpixel electrode 191h and the second subpixel electrode 1911 are separated from each other, interposing the first area V1 therebetween, with the first subpixel electrode 191h being disposed in the first subpixel PXa and the second subpixel electrode 1911 being disposed in the second subpixel PXb. Thus, in the present exemplary embodiment, two subpixel electrodes 191h and 191l forming one pixel electrode 191 respectively overlap different microcavities 305. However, the above-stated structure is only an example, and the two subpixel electrodes 191h and 191l of a single pixel electrode 191 may instead overlap the same microcavity 305.

The first subpixel electrode 191h is connected with the first drain electrode 175h through the first contact hole 181h, and the second subpixel electrode 191l is connected with the second drain electrode 1751 through the second contact hole 181l. Thus, when the first thin film transistor Qh and the second thin film transistor Ql are in their ON state, the first drain electrode 175h and the second drain electrode 175l respectively receive different data voltages.

The first subpixel electrode 191h and the second subpixel electrode 191l are each formed in the shape of a quadrangle, and each of the first subpixel electrode 191h and the second subpixel electrode 191l includes a cross stem configured from a horizontal stem 193 and a vertical stem 192. Further, each of the first subpixel electrode 191h and the second subpixel electrode 191l includes a plurality of minute branches 194h and 194l.

The pixel electrode 191 is divided into four subregions by the horizontal stems 193h and 193l and the vertical stems 192h and 192l. The minute branches 194h and 194l obliquely extend from the horizontal stems 193h and 193l and the vertical stems 192h and 192l, and their directions of extension may form an angle of approximately 45° or 135° with the gate line 121 or the horizontal stems 193h and 193l. Further, the directions of extension of the minute branches 194h and 194l of two adjacent subregions may be perpendicular to each other.

In the present exemplary embodiment, the first subpixel electrode 191h and the second subpixel electrode 191l may further include outer stems respectively surrounding the outside of each of the first and second subpixels PXa and PXb.

The layout form of the pixel, the structure of the thin film transistor, and the shape of the pixel electrode described above are only examples, and the present invention is not limited thereto and may be variously modified.

The common electrode 270 is positioned on the pixel electrode 191 so as to be spaced apart from the pixel electrode 191 by a predetermined distance. Microcavities 305 are provided between the pixel electrodes 191 and the common electrode 270. That is, the microcavities 305 are surrounded by their respective pixel electrode 191 and the common electrode 270. The common electrode 270 extends in a row direction, and is provided above the microcavities 305 and in the second areas V2. The common electrode 270 covers the upper surface and a part of a side surface of the microcavity 305. The size of the microcavity 305 may be variously modified according to the size and resolution of the display device.

However, the present invention is not limited thereto, and the common electrode 270 may instead be provided above the pixel electrode 191, interposing an insulation layer therebetween. In this case, the microcavity 205 may be provided on the common electrode 270.

The common electrode 270 may be made of a transparent metal oxide such as indium-tin oxide (ITO), indium-zinc oxide (IZO), and the like. The common electrode 270 may have a constant voltage applied thereto, and an electric field may thereby be formed between the pixel electrode 191 and the common electrode 270.

Alignment layers 11 and 21 are provided above the pixel electrode 191 and below the common electrode 270. The alignment layers 11 and 21 include a first alignment layer 11 and a second alignment layer 21. The first alignment layer 11 and the second alignment layer 21 may be provided as vertical alignment layers, and may be made of an alignment material such as polyamic acid, polysiloxane, polyimide, and the like. The first alignment layer 11 and the second alignment layer 21 may be connected with each other along a side wall at the edge of the microcavity 305.

The first alignment layer 11 is provided above the pixel electrode 191. The first alignment layer 11 may be provided immediately above that portion of the second insulation layer 250 which is not covered by the pixel electrode 191. In addition, the first alignment layer 11 may further be provided in the first area V1.

The second alignment layer 21 is provided below the common electrode 270 such that it faces the first alignment layer 11.

A liquid crystal layer formed of liquid crystal molecules 310 is provided in each microcavity 305. The liquid crystal molecules 310 may have negative dielectric anisotropy, and the liquid crystal molecules 310 may align in a vertical direction, perpendicular to the substrate 110, when the electric field is not applied. That is, the liquid crystal molecules 310 may be vertically aligned.

The first subpixel electrode 191h and the second subpixel electrode 191l to which the data voltages are applied generate an electric field together with the common electrode 270 to determine directions of the liquid crystal molecules 310 positioned in each microcavity 305. Luminance of light passing through the liquid crystal layer varies according to the directions of the liquid crystal molecules 310 determined above.

A third insulating layer 350 may be further provided on the common electrode 270. The third insulation layer 350 may be made of an inorganic insulating material such as silicon nitride (SiNx), silicon oxide (SiOx), and silicon oxynitride (SiOxNy), and may be omitted if necessary.

A roof layer 360 is provided on the third insulation layer 350. The roof layer 360 may be made of an organic material or an inorganic material. Further, the roof layer 360 may be provided as a single layer or multiple layers. The roof layer 360 extends along a row direction, and is disposed both above the microcavity 305 and in the second area V2. The roof layer 360 covers the upper surface and a part of a side surface of the microcavity 305. The roof layer 360 serves to maintain the shape of the microcavity 305 due to its rigidity, which is accomplished through a curing process. The roof layer 360 is separated from the pixel electrode 191, interposing the microcavity 305 therebetween.

Hereinabove, the color filter 230 disposed below the microcavity 305 has been described, but the location of the color filter 230 is not limited thereto. For example, the roof layer 360 may be made of a color filter material, and in this case, the color filter 230 is disposed above the microcavity 305.

The common electrode 270 and the roof layer 360 leave at least a part of the side surface of the edge of the microcavity 305 exposed, and portions of the microcavities 305 not covered by the common electrode 270 and the roof layer 360 become injection holes 307a and 307b. The injection holes 307a and 307b include a first injection hole 307a exposing a side surface of a first edge of the microcavity 305 and a second injection hole 307b exposing a side surface of a second edge of the microcavity 305. The first edge and the second edge face each other, and for example, in plan view, the first edge may be an upper edge of the microcavities 305 and the second edge may be a lower edge of the microcavities 305. Since the microcavity 305 is exposed by the injection holes 307a and 307b during a manufacturing process of the display device, an alignment solution, a liquid crystal material, or the like may be injected into the microcavities 305 through the injection holes 307a and 307b.

A fourth insulation layer 370 may be further provided on the roof layer 360. The fourth insulation layer 370 may be made of an inorganic insulation material such as silicon nitride (SiNx), silicon oxide (SiOx), and the like. The fourth insulation layer 370 may cover the upper surface and/or the side surface of the roof layer 360. The fourth insulation layer 370 serves to protect the organic material of the roof layer 360, and may be omitted as necessary.

The fourth insulation layer 370 has substantially the same shape as the roof layer 360 in plan view. The roof layer 360 may be formed as multiple layers, and in this case, the fourth insulation layer 370 may be a part of the roof layer 360.

In addition to the roof layer 360, the common electrode 270, the third insulation layer 350, and the fourth insulation layer 370 are not provided in the first area V1. Thus, a trench TRE having a depth that corresponds to the total thickness of the microcavity 305, the common electrode 270, the third insulation layer 350, the roof layer 360, and the fourth insulation layer 370 is provided in the first area V1. The injection holes 307a and 307b contact and/or face the trench TRE.

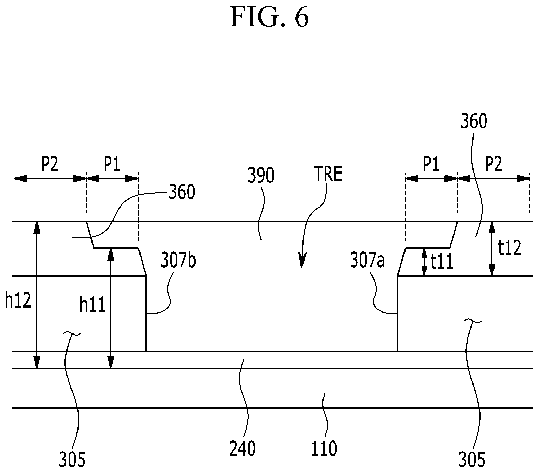

The thickness of the roof layer 360 is constant across most of its area, and becomes relatively thin at its edges. Hereinafter, the shape of the roof layer 360 may be described in detail with reference to FIG. 6.

FIG. 6 is a cross-sectional view of a display device according to the exemplary embodiment. FIG. 6 conceptually illustrates certain structures shown in FIG. 4.

The roof layer 360 includes first portions P1 disposed at edges that are adjacent to the injection holes 307a and 307b, and second portions P2 that make up the remainder of roof layer 360. The second portions P2 comprise most of the area of the roof layer 360, and the first portions P1 correspond to part of the edge of the roof layer 360. A height h11 from the substrate 110 to the upper surface of the first portions P1 of the roof layer 360 is lower than a height h12 from the substrate 110 to the upper surface of the second portions P2 of the roof layer 360. A thickness t11 of the first portion P1 of the roof layer 360 is thinner than a thickness t12 of the second portion P2 of the roof layer 360.

The second portions P2 occupying most of the area of the roof layer 360 have a constant thickness, and the first portions P1 disposed at the edges of the roof layer 360 are thinner than the second portions P2. The first portions P1 of the roof layer 360 are formed in the shape of a step. That is, the thickness of the roof layer 360 is rapidly reduced at an interface between the second portions P2 and the first portions P1, rather than being gradually reduced.

In the present exemplary embodiment, the thickness variations of the roof layer 360 cause a height variation in the upper surface of the roof layer 360. In this case, the height of the upper surface of the roof layer 360 implies the distance from the substrate 110 to the upper surface of the roof layer 360. The microcavities 305 disposed below the roof layer 360 have constant heights. In this case, the height of the microcavity 305 implies the height from the bottom surface of the microcavity 305 to its ceiling. That is, referring to FIG. 6, it implies the height from the upper surface of the first insulation layer 240 to the bottom surface of the roof layer 360. Further, the first insulation layer 240 disposed below the roof layer 360 has a substantially constant thickness.

An encapsulation layer 390 is provided in the trench TRE. The encapsulation layer 390 covers injection holes 307a and 307b that contact the trench TRE. That is, the encapsulation layer 390 seals microcavities 305 such that the liquid crystal molecules 310 in the microcavities 305 can be prevented from leaking out. Since the encapsulation layer 390 contacts the liquid crystal molecule 310, the encapsulation layer 390 is preferably made of a material that does not react with the liquid crystal molecule 310. For example, the encapsulation layer 390 may be made of parylene and the like.

The encapsulation layer 390 partially overlaps the roof layer 360. The encapsulation layer 390 covers an edge of the roof layer 360 that is adjacent to the injection holes 307a and 307b. That is, the encapsulation layer 390 is disposed in the trench TRE and over the first portions P1 of the roof layer 360. The encapsulation layer 390 does not overlap the second portions P2 of the roof layer 360. The upper surface of the second portions P2 and the upper surface of the encapsulation layer 390 are thus planarized. That is, the height from the substrate 110 to the upper surface of the second portions P2 of the roof layer 360 is substantially equal to the height from the substrate 110 to the upper surface of the encapsulation layer 390.

The encapsulation layer 390 may be formed as multiple layers, such as a double layer or a triple layer. The double layer is configured of two layers made from different materials. The triple layer is configured of three layers, and materials of adjacent layers are different from each other. For example, the encapsulation layer 390 may include a layer made of an organic insulating material and a layer made of an inorganic insulating material.

Polarizing plates 12 and 22 may be further provided in upper and bottom surfaces of the display device. The polarizing plates 12 and 22 may include a first polarizing plate 12 and a second polarizing plate 22. The first polarizing plate 12 may be attached to the bottom surface of the substrate 110, and the second polarizing plate 22 may be attached on the roof layer 360 and the encapsulation layer 390.

The second polarizing plate 22 may be attached to the second portions P2 of the roof layer 360 and to the encapsulation layer 390. In this case, since the upper surface of the second portions P2 and the upper surface of the encapsulation layer 390 are flat and substantially coplanar, the second polarizing plate 22 can be stably attached thereto. Accordingly, the second polarizing plate 22 can be prevented from being lifted.

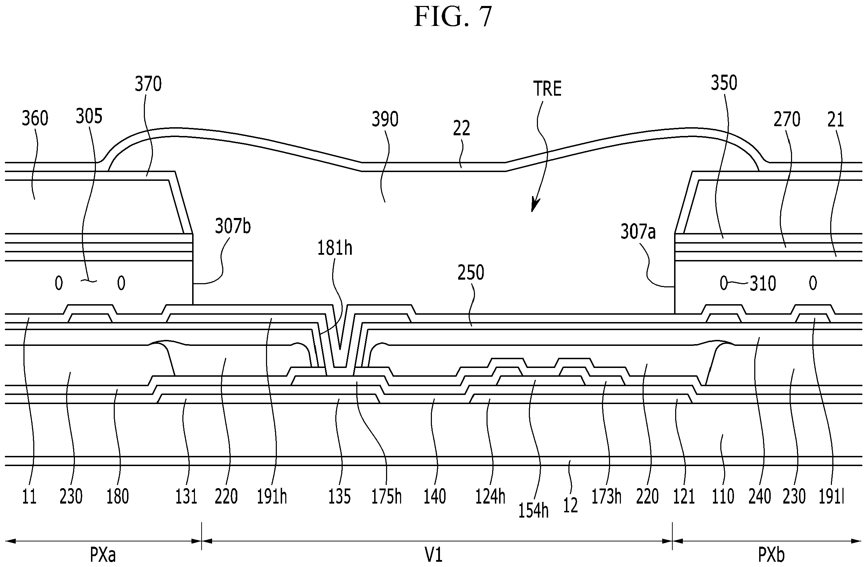

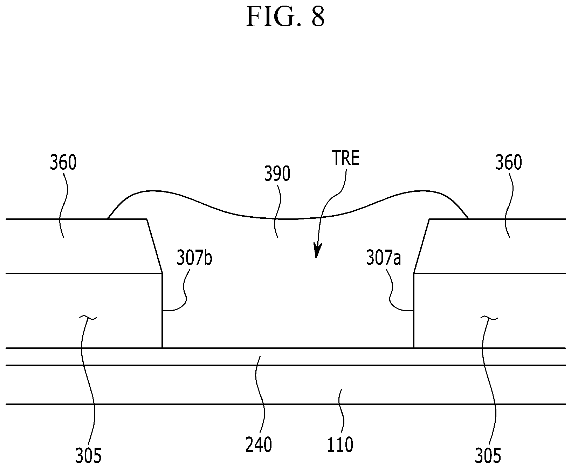

Hereinafter, a structure of a display device according to a reference example will be described referring to FIG. 7 and FIG. 8 for comparison with the display device according to the above-stated exemplary embodiment.

FIG. 7 is a cross-sectional view of a display device according to a reference example of the present invention, and FIG. 8 is a simplified cross-sectional view of FIG. 7. FIG. 8 conceptually illustrates certain structures of FIG. 7.

A display device according to a reference example has a structure that is similar to the structure of the above-stated display device, except for the shape of a roof layer 360.

The thickness of the roof layer 360 is wholly uniform, and the height from a substrate 110 to the upper surface of the roof layer 360 is wholly uniform. That is, the thickness of an edge of the roof layer 360, which is adjacent to injection holes 307a and 307b, is equal to the thickness of other portions of the roof layer 360. Thus, a step is not formed in the roof layer 360.

An encapsulation layer 390 is provided in a trench TRE, and the encapsulation layer 390 overlaps the edge of the roof layer 360. The encapsulation layer 390 covers edges of the roof layer 360 which are adjacent to the injection holes 307a and 307b. In this case, since the upper surface of the roof layer 360 is wholly planarized, i.e. has a single elevation, a step is formed between the roof layer 360 and the encapsulation layer 390 if the encapsulation layer 390 covers the upper surface of the edge of the roof layer 36. That is, the encapsulation layer 390 extends over the roof layer 360 to form a raised bump thereon.

In the display device according to such a reference example, the upper surface of the roof layer 360 and the upper surface of the encapsulation layer 390 are not planarized. Thus, the second polarizing plate 22 may be lifted at an interface between the roof layer 360 and the encapsulation layer 390. On the contrary, in the display device according to the previously-described exemplary embodiment, the height of the edge of the roof layer 360 adjacent to the injection holes 307a and 307b is lowered, and accordingly, the upper surface of the roof layer 360 and the upper surface of the encapsulation layer 390 are planarized. Thus, the second polarizing plate 22 can be more stably attached, thereby preventing the second polarizing plate 22 from being lifted.

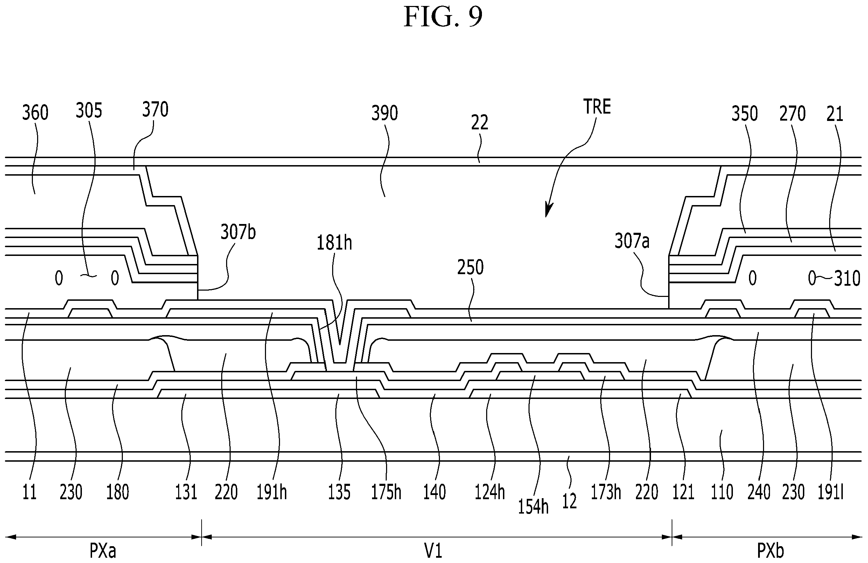

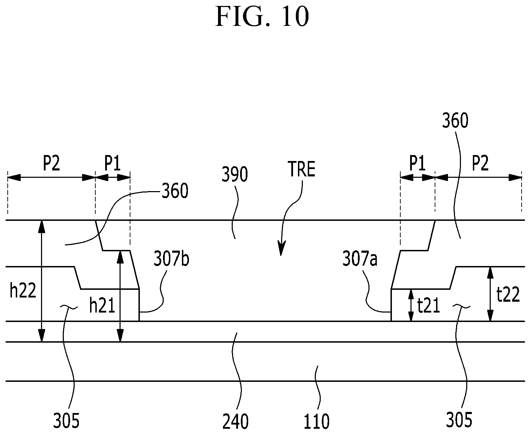

Next, a display device according to an exemplary embodiment will be described with reference to FIG. 9 and FIG. 10.

A display device shown in FIG. 9 and FIG. 10 is substantially similar to the display device of FIG. 1 to FIG. 6, and therefore any duplicate description will be omitted. However, microcavities of the present exemplary embodiment do not have uniform heights compared to the display device according to the above-stated exemplary embodiment, which is further described below.

FIG. 9 is a cross-sectional view of a display device according to an exemplary embodiment, and FIG. 10 is a simplified cross-sectional view of FIG. 10. FIG. 10 conceptually illustrates certain structures of FIG. 9.

In the above-stated exemplary embodiment, the microcavities 305 have uniform heights, but in the present exemplary embodiment, the microcavities 305 do not have uniform heights. In the present exemplary embodiment, the heights of the microcavities 305 are uniform across most of their area, but the height of a portion of the microcavities 305 that is adjacent to the injection holes 307 and 307b is lowered. A height t21 of a portion of the microcavity 305 that overlaps first portions P1 of the roof layer 360 is lower than a height t22 of portions that overlap a second portion P2 of the roof layer 360. The microcavities 305 have uniform heights in portions that overlap the second portions P2 of the roof layer 360.

The thickness of the roof layer 360 provided above the microcavities 305 is substantially uniform. Thus, the upper surface of the roof layer 360 has a step in edges that are adjacent to the injection holes 307a and 307b. A height h21 from the substrate 110 to the upper surface of the first portions P1 of the roof layer 360 is lower than a height h22 from the substrate 110 to the upper surface of the second portions P2.

The first portions P1 of the roof layer 360 are formed in the shape of a step. That is, the height of the first portions P1 is rapidly reduced at an interface between the second portions P2 and the first portions P1 of the roof layer 360 rather than being gradually reduced.

In the present exemplary embodiment, the height of the upper surface of the roof layer 360 is changed by changing the height of the microcavity 305. Thus, the roof layer 360 has a substantially uniform thickness. Further, a first insulation layer 240 provided below the microcavity 305 also has a substantially uniform thickness.

An encapsulation layer 390 is provided above the first portions P1 of a trench TRE. The upper surface of the second portions P2 of the roof layer 360 and the upper surface of the encapsulation layer 390 are planarized. That is, the height h22 from the substrate 110 to the upper surface of the second portions P2 of the roof layer 360 is substantially equal to the height from the substrate 110 to the upper surface of the encapsulation layer 390.

The second polarizing plate 22 is attached to the second portions P2 of the roof layer 360 and the encapsulation layer 390. In this case, since the upper surface of the second portions P2 of the roof layer 360 and the upper surface of the encapsulation layer 390 are flat or substantially coplanar, the second polarizing plate 22 can be more stably attached.

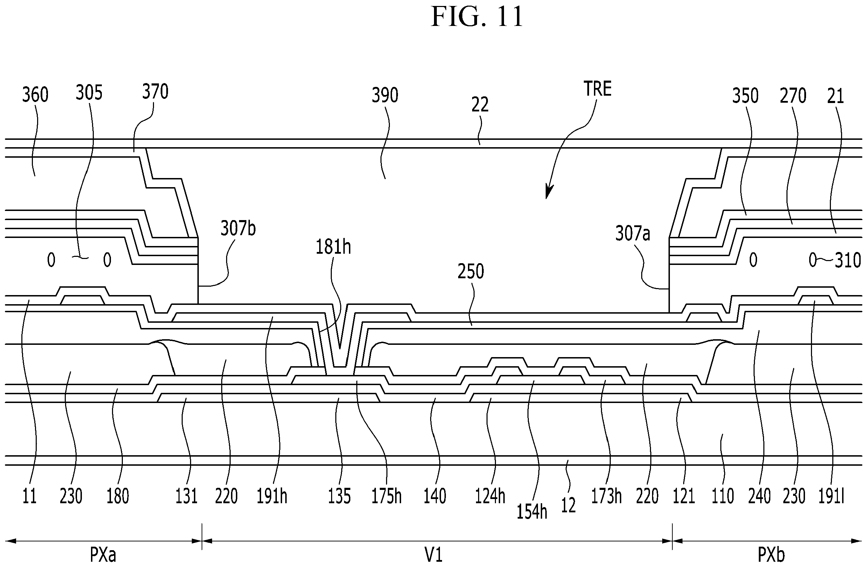

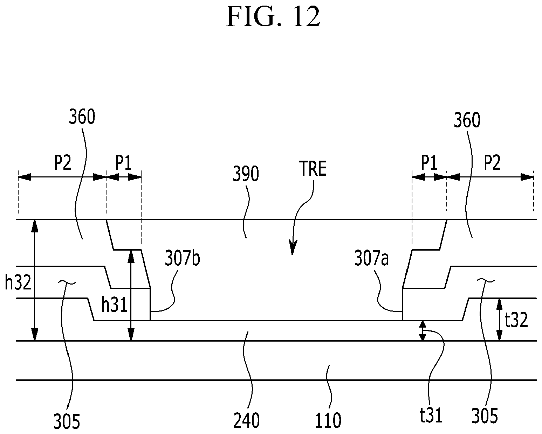

Next, a display device according to another exemplary embodiment will be described with reference to FIG. 11 and FIG. 12.

A display device according to another exemplary embodiment of FIG. 11 and FIG. 12 is substantially the same as the display device of FIG. 1 to FIG. 6, and therefore any duplicate description will be omitted. However, the display device of the present exemplary embodiment is different from the display device of the above-stated exemplary embodiment in that the thickness of a first insulation layer is not uniform.

FIG. 11 is a cross-sectional view of a display device according to another exemplary embodiment, and FIG. 12 is a simplified cross-sectional view of FIG. 11. FIG. 12 conceptually illustrates certain elements of FIG. 11.

In the above-stated exemplary embodiment, the first insulation layer 240 has a substantially uniform thickness, but in the present exemplary embodiment, the first insulation layer 240 does not have a uniform thickness. In the present exemplary embodiment, the thickness of the first insulation layer 240 is uniform across most of its area, but is thinner adjacent to the injection holes 307 and 307b. A thickness t31 of a portion of the first insulation layer 240 overlapping first portions P1 of a roof layer 360 is less than a thickness t32 of a portion of the first insulation layer 240 overlapping second portions P2 of the roof layer 360. The first insulation layer 240 has a substantially uniform thickness in a portion that overlaps the second portions P2 of the roof layer 360.

The first insulation layer 240 is step-shaped in a portion that overlaps the first portions P1 of the roof layer 360. That is, the thickness of the first insulation layer 240 is rapidly reduced rather than being gradually reduced at an interface between the second portions P2 and the first portions P1 of the roof layer 360.

Microcavities 305 provided above the first insulation layer 240 have substantially uniform heights. In this case, the height of the microcavity 305 implies a distance from the bottom surface of the microcavity 305 to a ceiling surface of the microcavity 305. The height of a portion of the microcavity 305 overlapping the interface of the first portions P1 and the second portions P2 of the roof layer 360 is relatively higher than the height of other portions of the microcavity 305. The height of a portion of the microcavity 305 overlapping the first portions P1 of the roof layer 360 is similar to the height of a portion of the microcavity 305 overlapping the second portions P2 of the roof layer 360. However, locations of the step differences in height of the microcavity 305 are changed.

Further, the roof layer 360 provided above the microcavity 305 has a substantially uniform thickness. Thus, the upper surface of the roof layer 360 has a step at an edge portion that is adjacent to the injection holes 307a and 307b. The height h31 from the substrate 110 to the upper surface of the first portions P1 of the roof layer 360 is lower than the height h32 from the substrate 110 to the upper surface of the second portions P2 of the roof layer 360.

The first portions P1 of the roof layer 360 are step-shaped. That is, the thickness of the first portions P1 is rapidly reduced rather than being gradually reduced at an interface between the second portions P2 and the first portions P1 of the roof layer 360.

In the present exemplary embodiment, the height of the upper surface of the roof layer 360 is changed by changing the thickness of the first insulation layer 240. Thus, the roof layer 360 and the microcavity 305 both contain step-differences in elevation.

An encapsulation layer 390 is provided in a trench TRE and above the first portions P1 of the roof layer 360. The upper surface of the second portions P2 of the roof layer 360 and the upper surface of the encapsulation layer 390 are planarized, or substantially coplanar. That is, a height h32 from the substrate 110 to the upper surface of the second portions P2 of the roof layer 360 is substantially equal to the height from the substrate 110 to the upper surface of the encapsulation layer 390.

A second polarizing plate 22 is attached to the second portions P2 of the roof layer 360 and the encapsulation layer 390. In this case, since the upper surface of the second portions P2 of the roof layer 360 and the upper surface of the encapsulation layer 390 are planarized or substantially coplanar, the second polarizing plate 22 can be more stably attached.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

### <Description of symbols>

11: first alignment layer
21: second alignment layer
22: first polarizing plate
12: second polarizing plate
121: gate line
171: data line
191: pixel electrode
240: first insulation layer
307a, 307b: injection hole
270: common electrode
305: microcavity
360: roof layer
P1: first portion of roof layer
P2: second portion of roof layer
390: encapsulation layer
TRE: trench

## Claims

1. A display device comprising:
a substrate (110);
a thin film transistor (Qh, Ql) disposed on the substrate (110);
a pixel electrode (191, 191h, 191l) connected with the thin film transistor;
a plurality of roof layers (360) disposed on the pixel electrode (191, 191h, 191l), while interposing a microcavity (305) therebetween; an injection hole (307a, 307b) disposed along a side surface of the microcavity (305);
a liquid crystal layer (310) disposed in the microcavity (305); and a trench (TRE) between the plurality of roof layers (360) with an encapsulation layer (390) disposed in the trench (TRE) to cover the injection hole (307a, 307b) of the microcavity (305), and **characterized in that** the roof layer (360) comprises a first portion (P1) disposed adjacent to the injection hole (307a, 307b), and a second portion (P2) other than the first portion (P1), wherein the height (h11, h21, h31) from the substrate (110) to the upper surface of the first portion (P1) is lower than the height (h12, h22, h32) from the substrate (110) to the upper surface of the second portion (P2), whereby the first portion (P1) of the roof layer (360) is formed in the shape of a step, and
wherein the encapsulation layer (390) is disposed above the first portions (P1) of the roof layers (360) but not on the second portions (P2) of the roof layers (360), whereby the upper surface of the second portion (P2) and the upper surface of the encapsulation layer (390) are substantially coplanar.

2. The display device of claim 1, wherein the injection hole (307a, 307b) contacts the trench (TRE).

3. The display device of one of the preceding claims, wherein the thickness (t11) of the first portion (P1) of the roof layer (360) is less than the thickness (t12) of the second portion (P2) of the roof layer (360).

4. The display device of claim 3, wherein the microcavity (305) has a uniform height.

5. The display device of one of claims 1 and 2, wherein the height (t21) of a portion of the microcavity (205) overlapping the first portion (P1) of the roof layer (360) is lower than the height (t22) of a portion of the microcavity (305) overlapping the second portion (P2) of the roof layer (360).

6. The display device of claim 5, wherein the roof layer (360) has a uniform thickness.

7. The display device of one of claims 1 and 2, further comprising an insulation layer (240) disposed above the thin film transistor.

8. The display device of claim 7, wherein a portion of the insulation layer (240) overlapping the first portion (P1) of the roof layer (360) is thinner than a portion of the insulation layer (240) overlapping the second portion (P2) of the roof layer (360).

9. The display device of claim 8, wherein the roof layer (360) has a uniform thickness.

10. The display device of claim 8 or 9, wherein the microcavity (305) has a uniform height.

## Patentansprüche

1. Eine Anzeigevorrichtung, aufweisend:
ein Substrat (110);
einen Dünnfilmtransistor (Qh, Ql), der auf dem Substrat (110) angeordnet ist;
eine Pixelelektrode (191, 191h, 1911), die mit dem Dünnfilmtransistor verbunden ist;
eine Vielzahl von Dachschichten (360), die auf der Pixelelektrode (191, 191h, 1911) unter Einfügen einer Mikrokavität (350) dazwischen angeordnet sind;
ein Injektionsloch (307a, 307b), das entlang einer Seitenfläche der Mikrokavität (305) angeordnet ist;
eine Flüssigkristallschicht (310), die in der Mikrokavität (305) angeordnet ist; und
einen Graben (TRE) zwischen der Vielzahl der Dachschichten (360) mit einer Verkapselungsschicht (390), die im Graben (TRE) angeordnet ist, um das Injektionsloch (307a, 307b) der Mikrokavität (305) zu bedecken, und
**dadurch gekennzeichnet, dass**
die Dachschicht (360) einen ersten Abschnitt (P1), der benachbart zum Injektionsloch (307a, 307b) angeordnet ist, und einen zweiten Abschnitt (P2) außer dem ersten Abschnitt (P1) aufweist, wobei die Höhe (h11, h21, h31) vom Substrat (110) zur Oberseite des ersten Abschnitts (P1) kleiner ist als die Höhe (h12, h22, h23) vom Substrat (110) zur Oberseite des zweiten Abschnitts (P2), so dass der erste Abschnitt (P1) der Dachschicht (360) in der Form einer Stufe ausgebildet ist, und
wobei die Verkapselungsschicht (390) über den ersten Abschnitten (P1) der Dachschichten (360), jedoch nicht auf den zweiten Abschnitten (P2) der Dachschichten (360) angeordnet ist, so dass die Oberseite des zweiten Abschnitts (P2) und die Oberseite der Verkapselungsschicht (390) im Wesentlichen koplanar sind.

2. Die Anzeigevorrichtung nach Anspruch 1, wobei das Injektionsloch (307a, 307b) mit dem Graben (TRE) in Kontakt steht.

3. Die Anzeigevorrichtung nach einem der vorhergehenden Ansprüche, wobei die Dicke (t11) des ersten Abschnitts (P1) der Dachschicht (360) kleiner ist als die Dicke (t12) des zweiten Abschnitts (P2) der Dachschicht (360).

4. Die Anzeigevorrichtung nach Anspruch 3, wobei die Mikrokavität (305) eine gleichmäßige Höhe aufweist.

5. Die Anzeigevorrichtung nach einem der Ansprüche 1 und 2, wobei die Höhe (t21) eines Abschnitts der Mikrokavität (305), der den ersten Abschnitt (P1) der Dachschicht (360) überlappt, kleiner ist als die Höhe (t22) eines Abschnitts der Mikrokavität (305), der den zweiten Abschnitt (P2) der Dachschicht (360) überlappt.

6. Die Anzeigevorrichtung nach Anspruch 5, wobei die Dachschicht (360) eine gleichmäßige Dicke aufweist.

7. Die Anzeigevorrichtung nach einem der Ansprüche 1 und 2, ferner aufweisend eine Isolierschicht (240), die über dem Dünnfilmtransistor angeordnet ist.

8. Die Anzeigevorrichtung nach Anspruch 7, wobei ein Abschnitt der Isolierschicht (240), der den ersten Abschnitt (P2) der Dachschicht (360) überlappt, dünner ist als ein Abschnitt der Isolierschicht (240), der den zweiten Abschnitt (P2) der Dachschicht (360) überlappt.

9. Die Anzeigevorrichtung nach Anspruch 8, wobei die Dachschicht (360) eine gleichmäßige Dicke aufweist.

10. Die Anzeigevorrichtung nach Anspruch 8 oder 9, wobei die Mikrokavität (305) eine gleichmäßige Höhe aufweist.

## Revendications

1. Dispositif d'affichage, comprenant :
un substrat (110) ;
un transistor à couches minces (Qh, Ql) disposé sur le substrat (110) ;
une électrode de pixel (191, 191h, 1911) connectée au transistor à couches minces ;
plusieurs couches de couverture (360) disposées sur l'électrode de pixel (191, 191h, 1911), une microcavité (305) étant interposée entre ces dernières ;
un trou d'injection (307a, 307b) disposé le long d'une surface latérale de la microcavité (305) ;
une couche de cristaux liquides (310) disposée dans la microcavité (305) ; et
une tranchée (TRE) entre les plusieurs couches de couverture (360), une couche d'encapsulation (390) étant disposée dans la tranchée (TRE) pour couvrir le trou d'injection (307a, 307b) de la microcavité (305), et
**caractérisé en ce que**
la couche de couverture (360) comprend une première partie (P1) disposée adjacente au trou d'injection (307a, 307b), et une seconde partie (P2) autre que la première partie (P1), dans lequel la hauteur (h11, h21, h31) du substrat (110) à la surface supérieure de la première partie (P1) est inférieure à la hauteur (h12, h22, h32) du substrat (110) à la surface supérieure de la seconde partie (P2), ce par quoi la première partie (P1) de la couche de couverture (360) est réalisée sous la forme d'un étage, et
dans lequel la couche d'encapsulation (390) est disposée au-dessus des premières parties (P1) des couches de couverture (360) mais pas sur les secondes parties (P2) des couches de couverture (360), ce par quoi la surface supérieure de la seconde partie (P2) et la surface supérieure de la couche d'encapsulation (390) sont sensiblement coplanaires.

2. Dispositif d'affichage selon la revendication 1, dans lequel le trou d'injection (307a, 307b) contacte la tranchée (TRE).

3. Dispositif d'affichage selon l'une des revendications précédentes, dans lequel l'épaisseur (t11) de la première partie (P1) de la couche de couverture (360) est inférieure à l'épaisseur (t12) de la seconde partie (P2) de la couche de couverture (360).

4. Dispositif d'affichage selon la revendication 3, dans lequel la microcavité (305) a une hauteur uniforme.

5. Dispositif d'affichage selon l'une des revendications 1 et 2, dans lequel la hauteur (t21) d'une partie de la microcavité (205) chevauchant la première partie (P1) de la couche de couverture (360) est inférieure à la hauteur (t22) d'une partie de la microcavité (305) chevauchant la seconde partie (P2) de la couche de couverture (360).

6. Dispositif d'affichage selon la revendication 5, dans lequel la couche de couverture (360) a une épaisseur uniforme.

7. Dispositif d'affichage selon l'une des revendications 1 et 2, comprenant en outre une couche isolante (240) disposée au-dessus du transistor à couches minces.

8. Dispositif d'affichage selon la revendication 7, dans lequel une partie de la couche isolante (240) chevauchant la première partie (P1) de la couche de couverture (360) est plus mince qu'une partie de la couche isolante (240) chevauchant la seconde partie (P2) de la couche de couverture (360).

9. Dispositif d'affichage selon la revendication 8, dans lequel la couche de couverture (360) a une épaisseur uniforme.

10. Dispositif d'affichage selon la revendication 8 ou 9, dans lequel la microcavité (305) a une hauteur uniforme.
